# FASCICULE DE BREVET EUROPEEN

(11) **EP 3 997 317 B1**
(45) Date de publication et mention de la délivrance du brevet: **03.09.2025**
(21) Numéro de dépôt: 20751183.3
(22) Date de dépôt: 08.07.2020
(51) Int. Cl.: F02C 3/107, F02K 3/06

(54) **ASSEMBLAGE DE MAINTIEN D'UN TRAIN D'ENGRENAGES DANS UNE TURBOMACHINE**
ANORDNUNG ZUM HALTEN EINES GETRIEBEZUGS IN EINER TURBOMASCHINE
ASSEMBLY FOR RETAINING A GEAR TRAIN IN A TURBOMACHINE

(30) Priorité: 08.07.2019 FR 1907641
(43) Date de publication de la demande: 18.05.2022
(73) Titulaire: SAFRAN AIRCRAFT ENGINES, 75015 Paris (FR)
(72) Inventeur: BECOULET, Julien, Patrick, 77550 MOISSY-CRAMAYEL (FR); FORMICA, Olivier, 77550 MOISSY-CRAMAYEL (FR)
(74) Mandataire: Ernest Gutmann - Yves Plasseraud S.A.S.
(86) Numéro de dépôt international: PCT/FR2020/051222
(87) Numéro de publication internationale: WO 2021/005306

(56) Documents cités:
- EP-B1- 1 183 444
- US-A1- 2017 122 426
- US-A1- 2018 051 701

## Description

### Domaine technique de l'invention

La présente invention concerne les dispositifs de maintien d'un train d'engrenages dans une turbomachine.

### Etat de la technique antérieure

Classiquement un train d'engrenages comprend des pignons satellites en prise avec une couronne externe ou planétaire externe et un pignon central ou planétaire interne. Les pignons satellites sont portés par un porte-satellite et montés libre en rotation sur des pivots. Un tel train d'engrenages peut servir notamment à la transmission de puissance d'un arbre moteur, tel que l'arbre d'un compresseur basse pression, à une roue de soufflante par l'intermédiaire d'un pignon central porté par l'arbre. Dans une configuration de fonctionnement possible, le porte-satellites est fixe en rotation et le pignon central et la couronne externe sont menant et mené, respectivement. Ce montage est couramment appelé réducteur planétaire. Avec un tel agencement, il est par exemple possible, dans une turbomachine, d'entrainer la roue de soufflante reliée à la couronne par l'intermédiaire de l'arbre du compresseur basse pression.

Toutefois, l'intégration d'un réducteur dans une turbomachine pose plusieurs difficultés. En premier lieu, la liaison du réducteur, c'est-à-dire du porte-satellites, au carter doit être réalisée avec une certaine souplesse pour limiter des sollicitations mécaniques parasites au sein du réducteur, c'est-à-dire limiter la détérioration prématurée des dentures, et aussi filtrer toutes les vibrations se propageant dans la chaîne de transmission par exemple. En second lieu, un couple important doit pouvoir être repris par le carter dans les conditions normales mais également en conditions extrêmes de fonctionnement. Les deux points précités apparaissent ainsi clairement antinomiques et relèvent donc généralement d'un compromis dans l'architecture de montage du réducteur. Pourtant, ces deux fonctions permettent d'assurer à la fois un comportement optimum du réducteur mais également une tenue mécanique satisfaisante de la liaison du réducteur avec le carter. En troisième lieu, il est nécessaire que l'architecture retenue permette une bonne accessibilité pour assurer le montage et la maintenance du réducteur dans son environnement.

On notera que les difficultés exposées ci-dessus sont les mêmes lorsque c'est la couronne externe qui est fixe, et le porte-satellites tournant (train épicycloïdal). Les documents US2018/051701A1 et EP1183444B1 divulguent des assemblages de maintien de trains d'engrenages selon l'art antérieur.

L'invention exposée ci-après propose une solution permettant de résoudre les problèmes précités tout en étant simple et économique à mettre en oeuvre.

### Résumé de l'invention

Le présent document concerne un assemblage destiné au maintien d'un train d'engrenages dans une turbomachine, l'assemblage comprenant un carter annulaire dans lequel est engagé une pièce annulaire bloquée en rotation dans le carter par des moyens de crabotage annulaire comportant des premiers moyens de couplage annulaire formés sur la pièce annulaire et coopérant avec des seconds moyens de couplage annulaire formés sur le carter annulaire, dans lequel un film d'huile est formé dans un espace annulaire délimité entre les premiers moyens de couplage et les seconds moyens de couplage.

L'intégration d'un film d'huile directement dans les moyens de crabotage de la pièce annulaire au carter permet d'amortir les déplacements de la pièce annulaire par rapport au carter. Ainsi, lorsque la pièce annulaire est solidaire d'un porte-satellites ou d'un planétaire externe d'un train d'engrenages, il est ainsi possible de limiter la transmission des vibrations au carter et au reste de la turbomachine.

Plus spécifiquement, l'intégration d'un film d'huile entre les premiers moyens de couplage et les seconds moyens de couplage permet de réaliser :
- un amortissement en translation selon une direction radiale de la pièce annulaire relative au carter,
- un amortissement en torsion autour de l'axe longitudinal, c'est-à-dire l'axe de l'assemblage et de la turbomachine,
- un amortissement en basculement autour d'un axe perpendiculaire à une direction radiale et à l'axe longitudinal.

La pièce annulaire pourra comprendre une zone annulaire de souplesse permettant de conférer à la pièce une plus grande souplesse à un endroit donné par rapport au reste de la pièce annulaire. Cette zone annulaire de souplesse permet d'avoir un orbitage plus important de la pièce annulaire dans le carter et donc permet d'augmenter l'efficacité d'amortissement du film d'huile.

L'intégration d'un film d'huile ne devrait pas avoir d'influence sur le couple nominal transmis par la pièce annulaire au carter mais contribue à diminuer les oscillations, c'est-à-dire les variations dudit couple, qui peuvent être de l'ordre de 10 à 15% du couple nominal.

Les premiers moyens de couplage et les seconds moyens de coupage sont par exemple agencés axialement entre un premier joint annulaire et un second joint annulaire chacun serré entre la pièce annulaire et le carter.

Pour réaliser l'alimentation en huile dudit espace annulaire, l'une de la pièce annulaire et du carter peut comprendre un canal d'arrivée ou d'entrée d'huile.

Les premiers moyens de couplage peuvent comprendre des premières dents intercalées circonférentiellement entre des secondes dents des seconds moyens de couplage.

Chaque première dent peut comprendre des faces d'extrémité circonférentielles radiales et en vis-à-vis circonférentiel de faces d'extrémités circonférentielles radiales de chaque seconde dent. Ces faces d'extrémités circonférentielles permettent de réaliser l'amortissement en torsion précité.

Chaque première dent peut comprendre une face d'extrémité radialement externe agencée en vis-à-vis radial d'une face du carter. Chaque seconde dent peut comprendre une face d'extrémité radialement interne agencée en vis-à-vis radial d'une face de la pièce annulaire. Ces faces d'extrémités radiales permettent de réaliser l'amortissement en translation précité. Chaque première dent peut comprendre une face d'extrémité axial agencée en vis-à-vis axial d'une face du carter. Chaque seconde dent peut comprendre une face d'extrémité axial agencée en vis-à-vis axial d'une face de la pièce annulaire. Ces faces d'extrémités axiales permettent de réaliser l'amortissement en basculement précité.

Lesdites premières dents peuvent s'étendre axialement depuis une première paroi annulaire radiale de la pièce annulaire qui est agencée en vis-à-vis axial des extrémités axiales libres desdites secondes dents, lesdites secondes dents s'étendant axialement depuis une seconde paroi annulaire radiale du carter qui est agencée en vis-à-vis axial des extrémités libres des premières dents.

Selon une première alternative de l'invention le premier joint annulaire peut être intercalé radialement entre l'extrémité radialement externe de la première paroi annulaire et une surface cylindrique en vis-à-vis radial du carter. La surface cylindrique peut permettre le centrage de la pièce annulaire dans le carter lorsque la pièce annulaire est montée dans le carter.

Egalement ou selon une seconde alternative de l'invention, le second joint annulaire peut être intercalé radialement entre l'extrémité radialement interne de la seconde paroi annulaire et une surface cylindrique en vis-à-vis radial de la pièce annulaire.

La surface cylindrique du carter peut présenter un rayon qui supérieur au rayon de la surface cylindrique de la pièce annulaire. Chaque première dent peut s'étendre radialement vers l'extérieur depuis la surface cylindrique de la pièce annulaire et avoir une face d'extrémité radialement externe agencée en vis-à-vis radial de la surface cylindrique du carter. Chaque seconde dent peut s'étendre radialement vers l'intérieur depuis la surface cylindrique du carter et avoir une face d'extrémité radialement interne agencée en vis-à-vis radial de la surface cylindrique de la pièce annulaire.

Dans le montage ainsi proposé, le premier joint annulaire se trouve placé à une distance radial supérieure à celle du second joint.

L'huile peut se loger circonférentiellement et continument entre les premières et secondes dents. A cette fin :
- des jeux sont prévus, en direction circonférentielle, entre les premières dents et les secondes dents, et
- des jeux sont aussi prévus radialement entre les premières dents et le carter et entre les secondes dents et la pièce annulaire.

Egalement, l'huile peut se loger aussi entre les extrémités axiales des premières dents et la seconde paroi annulaire radiale et entre les extrémités axiales des secondes dents et la première paroi annulaire radiale.

Le document concerne aussi un ensemble comprenant un assemblage tel que décrit ci-dessus et un train d'engrenages comportant un planétaire interne et un planétaire externe et des pignons satellites en prise avec le planétaire interne et le planétaire externe et montés chacun libre en rotation sur un porte-satellites. La pièce annulaire peut être fixée au planétaire externe ou au porte-satellites.

L'invention sera mieux comprise et d'autres détails, caractéristiques et avantages de l'invention apparaîtront à la lecture de la description suivante faite à titre d'exemple non limitatif en référence aux dessins annexés.

### Brève description des figures

[Fig. 1] représente une vue schématique en perspective d'une turbomachine selon la technique connue ;
[Fig. 2] est une vue schématique en coupe d'un train d'engrenages épicycloïdal destiné à être utilisé dans une turbomachine selon la figure 1 ;
[Fig. 3] comprend une partie gauche nommée figure 3A représentant en perspective une pièce annulaire destinée à être montée dans un carter représenté en perspective sur la partie droite nommée figure 3B ;
[Fig. 4] est une schématique en perspective d'un assemblage de la pièce annulaire de la figure 3A dans le carter de la figure 3B ;
[Fig. 5] comprend une partie gauche nommée figure 5A représentant l'assemblage de la figure 4 selon un premier plan de coupe et une partie droite nommée figure 5B représentant l'assemblage de la figure 4 selon un second plan de coupe décalée circonférentiellement par rapport au premier plan de coupe ;
[Fig. 6] comprend une partie gauche nommée figure 6A représentant l'introduction d'huile entre la pièce annulaire et le carter, et une partie droite nommée figure 6B représentant les jeux entre la pièce annulaire et le carter en coupe selon un plan transverse.

### Description détaillée de l'invention

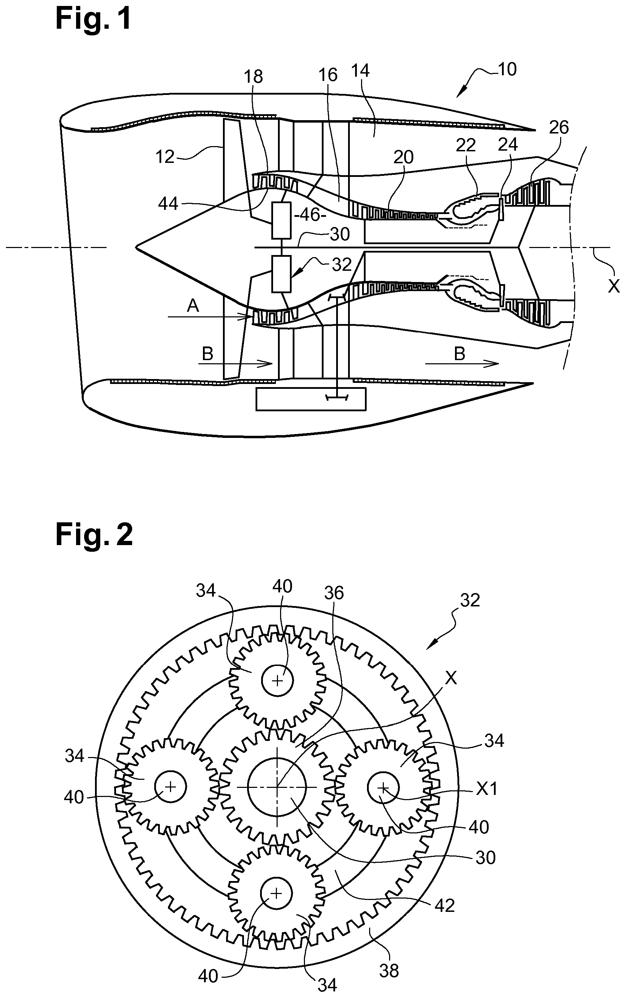

On se réfère tout d'abord à la figure 1 qui représente une vue schématique d'une turbomachine 10 selon la technique connue comprenant d'amont en aval une roue de soufflante 12 dont la rotation induit une accélération d'air dans une veine annulaire d'air secondaire 14 (flux d'air B) entourant, successivement d'amont en aval, une veine annulaire d'air primaire 16 (flux d'air A) s'écoulant dans un compresseur basse pression 18, un compresseur haute pression 20, une chambre annulaire de combustion 22, une turbine haute pression 24 et une turbine basse pression 26. Classiquement, la turbine basse pression 26 entraine en rotation le rotor 30 du compresseur basse pression lequel est relié à la roue de soufflante 12. Toutefois, pour limiter la vitesse de rotation de la roue de soufflante 12 relativement à la vitesse de rotation du rotor 30 du compresseur basse pression 18, il est connu de monter un réducteur 32 radialement à l'intérieur du compresseur basse pression 18 permettant de réduire la vitesse de rotation en sortie.

Comme illustré en figure 2, un tel train d'engrenages 32 comprend des pignons satellites 34 en prise avec un planétaire interne 36 ou pignon central et avec un planétaire externe 38 ou couronne extérieure, les planétaires interne 36 et externe 38 étant en coaxiaux à l'axe X de la turbomachine. Chaque pignon satellite 34 est monté libre en rotation autour d'un pivot 40 et les pivots 40 sont solidaires d'un porte-satellites 42. Dans un réducteur planétaire, le pignon central 36 est solidaire en rotation de l'arbre 30 du compresseur basse pression 18 qui forme une entrée d'un train d'engrenages, le porte satellites 42 est fixe et la couronne extérieure 38 est rendue solidaire de la roue de soufflante 12 et forme une sortie de réduction de la vitesse du train d'engrenages. Le carter 44 de la turbomachine délimite extérieurement une enceinte annulaire 46 dans laquelle est montée le train d'engrenages. Dans un réducteur épicycloïdal, le porte-satellites forme une sortie de réduction de la vitesse du train d'engrenages et est rendue solidaire de la roue de soufflante 12, le planétaire externe étant solidaire du carter. Dans l'un et l'autre cas, le porte-satellites lorsqu'il est fixe ou le planétaire externe lorsqu'il est fixe est relié par une pièce annulaire au carter.

L'objet de la présente invention est de proposer une réalisation particulière d'un assemblage pour le maintien d'un train d'engrenages 32 dans une turbomachine.

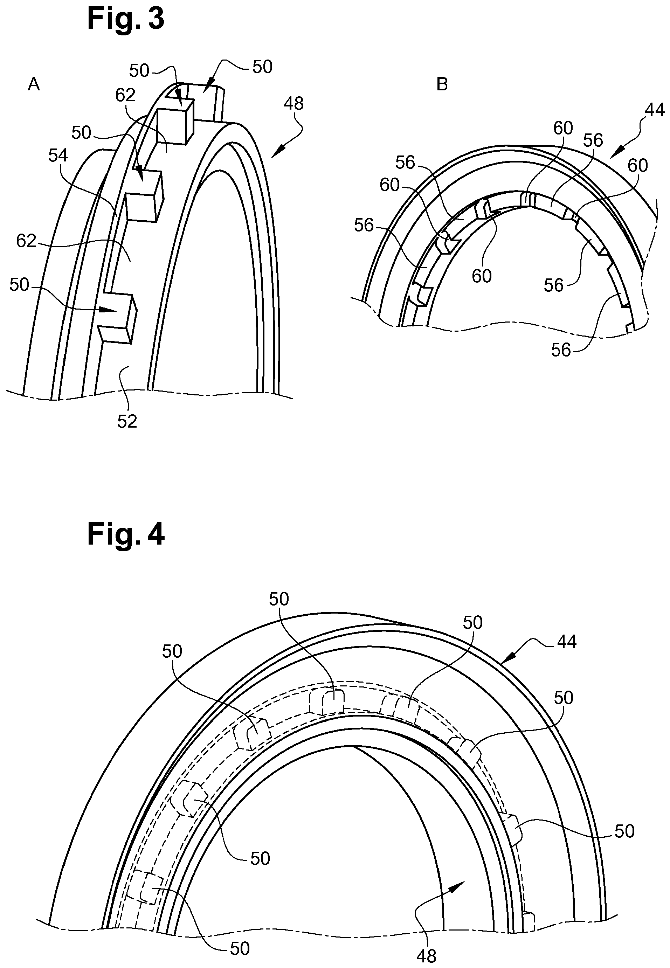

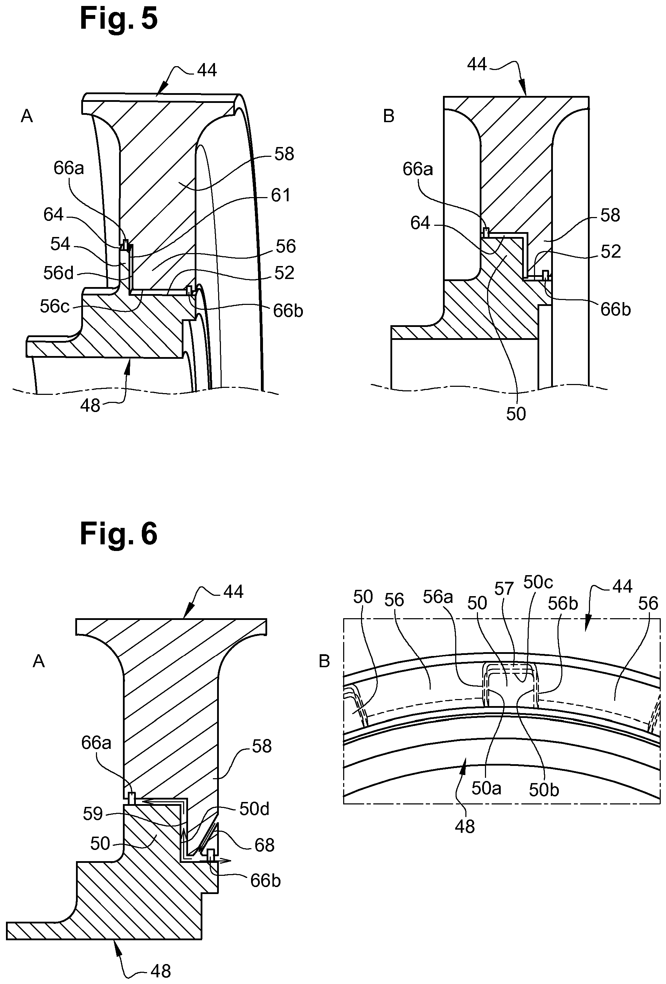

La figure 3A représentent une pièce annulaire 48 destinée à être reliée au porte-satellites 42 dans un montage à réducteur planétaire ou au planétaire externe 38 dans un réducteur épicycloïdal. Une partie seulement du carter 44 est représenté sur la figure 3B. Comme on peut l'observer, la pièce annulaire 48 comprend des premiers moyens de couplage formés d'une pluralité de premières dents 50 en saillie radialement vers l'extérieur depuis une paroi annulaire et plus précisément depuis une surface cylindrique 52 orientée radialement vers l'extérieur (figure 3A, figures 5A et 5B). Les premières dents 50 s'étendent axialement depuis une première paroi annulaire radiale 54 de la pièce annulaire 48. Chaque première dent 50 présente un profil sensiblement en pavé comprenant des faces sensiblement planes. Les premières dents 50 coopèrent avec des seconds moyens de couplage du carter 44. Ces seconds moyens de couplage comprennent des secondes dents 56 radiales régulièrement espacées circonférentiellement les unes des autres. Les secondes dents 56 s'étendent axialement depuis une seconde paroi annulaire radiale 58 et définissent circonférentiellement entre elles des évidements 60 de réception des premières dents 50. De même, les premières dents 50 définissent circonférentiellement entre elles des évidements 62 de réception des secondes dents 56.

Lorsque la pièce annulaire 48 est montée dans le carter 44, les extrémités libres axiales des premières dents 50 viennent en vis-à-vis axial de la seconde paroi annulaire radiale 58 du carter 44 et les extrémités libres axiales des secondes dents 56 viennent en vis-à-vis axial de la première paroi annulaire radiale 54 du carter 44.

Comme on peut le voir sur la figure 5, la première paroi annulaire radiale 54 est montée dans le carter 44 de sorte à ce que son extrémité radiale externe soit agencée en vis-à-vis d'une surface cylindrique 64 du carter 44. De même, l'extrémité radialement interne de la seconde paroi annulaire radiale 58 est agencée en vis-à-vis radial de la surface cylindrique 52 de la pièce annulaire 48.

Un premier joint annulaire 66a est intercalé radialement entre l'extrémité radialement externe de la première paroi annulaire radiale 54 et la paroi cylindrique du carter et un second joint annulaire 66b est intercalé radialement entre la face ou surface cylindrique 52 de la pièce annulaire 48 et l'extrémité radialement interne de la seconde paroi annulaire radiale 58. Chaque première dent 50 comprend des faces d'extrémité circonférentielles 50a, 50b s'étendant radialement et en vis-à-vis circonférentiel de faces d'extrémités circonférentielles 56a, 56b s'étendant radialement de chaque seconde dent 56 (figure 6B). Chaque première dent 50 comprend une face d'extrémité radialement externe 50c agencée en vis-à-vis radial d'une face 57 du carter 44 (figure 6B). Chaque seconde dent 56 comprend une face d'extrémité radialement interne 56c agencée en vis-à-vis radial la face 52 de la pièce annulaire 48 (figure 5A). Chaque première dent 50 comprend une face 50d d'extrémité axial agencée en vis-à-vis axial d'une face 59 du carter 44. Chaque seconde dent 56 comprend une face d'extrémité axial 56d agencée en vis-à-vis axial d'une face 61 de la pièce annulaire 44. Cette face 61 étant une face aval de la paroi annulaire radiale 54. Comme il y a plusieurs dents 50, 56, on comprend qu'il y a plusieurs faces comme précités.

Pour permettre la circulation d'huile dans l'espace annulaire formé entre les premières dents 50 et les secondes dents 56, il est nécessaire de dimensionner la pièce annulaire 48 et le carter 44 de manière à ce que :
- des jeux existent, en direction circonférentielle, entre les premières dents 50 et les secondes dents 56, plus spécifiquement entre les faces 50a et 56a et entre les faces 50b et 56b
- des jeux existent radialement entre les faces radialement externes des premières dents 50 et le carter 44 et entre les faces radialement internes des secondes dents 60 et la pièce annulaire 48, plus spécifiquement entre les faces 56c et 52 et entre les faces 50c et 57.

Egalement, l'huile se loge aussi entre les extrémités axiales des premières dents 50 et la seconde paroi annulaire radiale 58 et entre les extrémités axiales des secondes dents 56 et la première paroi annulaire radiale 54, plus spécifiquement entre les faces 56d et 61 et entre les faces 50d et 59.

L'huile est insérée par un canal 68 formé dans la seconde paroi annulaire radiale du carter, ce canal 68 débouchant entre le premier joint annulaire 66a et le second joint annulaire 66b. On comprend que l'huile pourrait aussi être insérée par un canal 68 formé dans la pièce annulaire 48.

L'utilisation d'un film d'huile entre les premières dents 50 et les secondes dents 56 permet d'amortir les déplacements de la pièce annulaire 52 par rapport au carter 44. Ainsi, lorsque la pièce annulaire 48 est solidaire d'un porte-satellites 42 ou d'un planétaire externe 38 d'un train d'engrenages 32 comme illustré en figure 2, il est ainsi possible de limiter la transmission des vibrations au carter 44 et au reste de la turbomachine.

## Revendications

1. Assemblage destiné au maintien d'un train d'engrenages (32) dans une turbomachine, l'assemblage comprenant un carter (44) annulaire dans lequel est engagé une pièce annulaire (48) bloquée en rotation dans le carter (44) par des moyens de crabotage annulaire comportant des premiers moyens de couplage (50) annulaire formés sur la pièce annulaire et coopérant avec des seconds moyens de couplage (56) annulaire formés sur le carter annulaire (44), dans lequel un film d'huile est formé dans un espace annulaire délimité entre les premiers moyens de couplage (50) et les seconds moyens de couplage (56), les premiers moyens (50) de couplage et les seconds moyens (56) de couplage étant agencés axialement entre un premier joint annulaire (66a) et un second joint annulaire (66b) chacun serré entre la pièce annulaire (48) et le carter (44), les premiers moyens de couplage (50) comprenant des premières dents (50) s'étendant radialement vers l'extérieur et disposées circonférentiellement en alternance avec des secondes dents (56) des seconds moyens de couplage, les secondes dents s'étendant radialement vers l'intérieur, lesdites premières dents (50) s'étendant axialement depuis une première paroi annulaire radiale (54) de la pièce annulaire (48) qui est agencée en vis-à-vis axial des extrémités axiales libres desdites secondes dents (56), lesdites secondes dents (56) s'étendant axialement depuis une seconde paroi annulaire radiale (58) du carter qui est agencée en vis-à-vis axial des extrémités libres des premières dents (50), dans lequel
- le premier joint annulaire (66a) est intercalé radialement entre l'extrémité radialement externe de la première paroi annulaire (54) et une surface cylindrique (64) en vis-à-vis radial du carter (44), et/ou
- le second joint annulaire (66b) est intercalé radialement entre l'extrémité radialement interne de la seconde paroi annulaire (58) et une surface cylindrique (52) en vis-à-vis radial de la pièce annulaire (48).

2. Assemblage selon la revendication 1, dans lequel l'une de la pièce annulaire (48) et du carter (44) comprend un canal (68) d'entrée d'huile dudit espace annulaire.

3. Assemblage selon la revendication 1 ou 2, dans lequel chaque première dent (50) comprend des faces (50a, 50b) d'extrémité circonférentielles radiales et en vis-à-vis circonférentiel de faces (56a, 56b) d'extrémités circonférentielles radiales de chaque seconde dent (56).

4. Assemblage selon l'une des revendications 1 à 3, dans lequel chaque première (50) dent comprend une face (50c) d'extrémité radialement externe agencée en vis-à-vis radial d'une face (57) du carter (44).

5. Assemblage selon l'une des revendications 1 à 4, dans lequel chaque seconde dent (56) comprend une face (56c) d'extrémité radialement interne agencée en vis-à-vis radial d'une face (52) de la pièce annulaire (48).

6. Assemblage selon l'une des revendications 1 à 5, dans lequel chaque première dent (50) comprend une face (50d) d'extrémité axial agencée en vis-à-vis axial d'une face (59) du carter (44).

7. Assemblage selon l'une des revendications 1 à 6, dans lequel chaque seconde dent (56) comprend une face (56d) d'extrémité axial agencée en vis-à-vis axial d'une face (61) de la pièce annulaire.

8. Ensemble comprenant un assemblage selon l'une des revendications précédentes et un train d'engrenages (32) comportant un planétaire interne (36) et un planétaire externe (38) et des pignons satellites (34) en prise avec le planétaire interne (336) et le planétaire externe (38) et montés chacun libre en rotation sur un porte-satellites (42).

9. Ensemble selon la revendication 8, dans lequel la pièce annulaire (48) est fixée au planétaire externe (38) ou au porte-satellites (42).

## Patentansprüche

1. Anordnung zum Halten eines Getriebezugs (32) in einer Turbomaschine bzw. einem Turbotriebwerk, wobei die Anordnung ein ringförmiges Gehäuse (44) umfasst, in das ein ringförmiges Teil (48) eingreift, das in dem Gehäuse (44) durch Ringformschlussmittel gegen Drehung gesichert ist, die erste Ringkopplungsmittel (50) umfassen, die an dem ringförmigen Teil ausgebildet sind und mit zweiten Ringkopplungsmitteln (56) zusammenwirken, die an dem ringförmigen Gehäuse (44) ausgebildet sind,
wobei ein Ölfilm in einem ringförmigen Raum vorgesehen ist, der zwischen den ersten Kopplungsmitteln (50) und den zweiten Kopplungsmitteln (56) eingegrenzt ist, wobei die ersten Kopplungsmittel (50) und die zweiten Kopplungsmittel (56) axial zwischen einer ersten Ringdichtung (66a) und einer zweiten Ringdichtung (66b) angeordnet sind, die jeweils zwischen dem ringförmigen Teil (48) und dem Gehäuse (44) eingeklemmt sind, wobei die ersten Kopplungsmittel (50) erste Zähne (50) umfassen, die sich radial nach außen erstrecken und in Umfangsrichtung abwechselnd mit zweiten Zähnen (56) der zweiten Kopplungsmittel angeordnet sind, wobei sich die zweiten Zähne radial nach innen erstrecken, wobei sich die ersten Zähne (50) axial von einer ersten radialen Ringwand (54) des ringförmigen Teils (48) aus erstrecken, die den freien axialen Enden der zweiten Zähne (56) axial gegenüberliegend angeordnet ist, wobei sich die zweiten Zähne (56) axial von einer zweiten radialen Ringwand (58) des Gehäuses aus erstrecken, die den freien Enden der ersten Zähne (50) axial gegenüberliegend angeordnet ist, wobei
- die erste Ringdichtung (66a) radial zwischen dem radial äußeren Ende der ersten Ringwand (54) und einer radial gegenüberliegenden zylindrischen Fläche (64) des Gehäuses (44) eingefügt ist, und/oder
- die zweite Ringdichtung (66b) radial zwischen dem radial inneren Ende der zweiten Ringwand (58) und einer radial gegenüberliegenden zylindrischen Fläche (52) des ringförmigen Teils (48) eingefügt ist.

2. Anordnung nach Anspruch 1,
wobei eines aus ringförmigem Teil (48) und Gehäuse (44) einen Öleinlasskanal (68) für den ringförmigen Raum umfasst.

3. Anordnung nach Anspruch 1 oder 2,
wobei jeder erste Zahn (50) radiale Umfangsendflächen (50a, 50b) umfasst, die in Umfangsrichtung den radialen Umfangsendflächen (56a, 56b) jedes zweiten Zahns (56) gegenüberliegen.

4. Anordnung nach einem der Ansprüche 1 bis 3,
wobei jeder erste Zahn (50) eine radial äußere Endfläche (50c) umfasst, die einer Fläche (57) des Gehäuses (44) radial gegenüberliegend angeordnet ist.

5. Anordnung nach einem der Ansprüche 1 bis 4,
wobei jeder zweite Zahn (56) eine radial innere Endfläche (56c) umfasst, die einer Fläche (52) des ringförmigen Teils (48) radial gegenüberliegend angeordnet ist.

6. Anordnung nach einem der Ansprüche 1 bis 5,
wobei jeder erste Zahn (50) eine axiale Endfläche (50d) umfasst, die einer Fläche (59) des Gehäuses (44) axial gegenüberliegend angeordnet ist.

7. Anordnung nach einem der Ansprüche 1 bis 6,
wobei jeder zweite Zahn (56) eine axiale Endfläche (56d) aufweist, die einer Fläche (61) des ringförmigen Teils axial gegenüberliegend angeordnet ist.

8. Baugruppe mit einer Anordnung nach einem der vorhergehenden Ansprüche und einem Getriebezug (32) mit einem Sonnenrad (36) und einem Hohlrad (38) und Planetenrädern (34), die mit dem Sonnenrad (36) und dem Hohlrad (38) in Eingriff stehen und jeweils frei drehbar an einem Planetenträger (42) gelagert sind.

9. Baugruppe nach Anspruch 8,
wobei das ringförmige Teil (48) am Hohlrad (38) oder am Planetenträger (42) festgelegt ist.

## Claims

1. An assembly for retaining a gear train (32) in a turbomachine, the assembly comprising an annular casing (44) in which an annular part (48) is engaged and rotationally fixed in the casing (44) by annular means of cogging comprising first annular means of coupling (50) formed on the annular part and cooperating with second annular means of coupling (56) formed on the annular casing (44), wherein an oil film is formed in an annular space defined between the first means of coupling (50) and the second means of coupling (56), the first means of coupling (50) and the second means of coupling (56) being axially arranged between a first annular seal (66a) and a second annular seal (66b) each clamped between the annular part (48) and the casing (44), the first means of coupling (50) comprising first teeth (50) extending radially outwardly and arranged circumferentially in alternation with second teeth (56) of the second means of coupling, the second teeth extending radially inwardly, said first teeth (50) extending axially from a first radial annular wall (54) of the ring member (48) which is arranged axially opposite the free axial ends of said second teeth (56), said second teeth (56) extending axially from a second radial annular wall (58) of the casing which is arranged axially opposite the free ends of the first teeth (50), wherein
- the first annular seal (66a) is radially interposed between the radially outer end of the first annular wall (54) and a radially facing cylindrical surface (64) of the casing (44), and/or
- the second annular seal (66b) is radially interposed between the radially inner end of the second annular wall (58) and a radially facing cylindrical surface (52) of the annular part (48).

2. An assembly according to claim 1, wherein one of the annular part (48) and the casing (44) comprises an oil-inlet channel (68) of the said annular space.

3. An assembly according to claim 1 or 2, wherein each first tooth (50) comprises circumferential radial end faces (50a, 50b) and circumferentially faces (56a, 56b) opposite radial circumferential end faces of each second tooth (56).

4. An assembly according to any of claims 1 to 3, wherein each first (50) tooth comprises a radially outer end face (50c) arranged radially opposite a face (57) of the casing (44).

5. An assembly according to any of claims 1 to 4, wherein each second tooth (56) comprises a radially inner end face (56c) arranged radially opposite a face (52) of the annular part (48).

6. An assembly according to any of claims 1 to 5, wherein each first (50) tooth comprises a radially outer end face (50d) arranged radially opposite a face (59) of the casing (44).

7. An assembly according to any of claims 1 to 6, wherein each second tooth (56) comprises a radially inner end face (56d) arranged radially opposite a face (61) of the annular part.

8. An assembly comprising an assembly according to any of the preceding claims and a gear train (32) having an inner planetary gear (36) and an outer planetary gear (38) and planet gears (34) meshing with the inner planetary gear (336) and the outer planetary gear (38), and each mounted for free rotation on a satellite carrier (42).

9. An assembly according to claim 8, wherein the annular part (48) is attached to the outer planetary gear (38) or to the satellite carrier (42).
